# EUROPÄISCHE PATENTANMELDUNG

(11) **EP 1 060 796 A1**
(43) Veröffentlichungstag der Anmeldung: **20.12.2000**
(21) Anmeldenummer: 99111461.2
(22) Anmeldetag: 12.06.1999
(51) Int. Cl.: B05B 15/04, B23K 26/14

(54) **Pulverabführungsvorrichtung**

(71) Anmelder: Deutsches Zentrum für Luft- und Raumfahrt e.V., 53175 Bonn (DE)
(72) Erfinder: Böttcher, Christian, 40472 Düsseldorf (DE)
(74) Vertreter: Hoeger, Stellrecht & Partner

(57) **Zusammenfassung**

Um eine Pulverabführungsvorrichtung zur Verwendung bei einem Werkstück-Fertigungsverfahren oder einem Werkstück-Bearbeitungsverfahren, bei dem ein Pulver zum Einsatz kommt, umfassend eine Auffangvorrichtung für das Pulver, zu schaffen, welche einen hohen Pulvernutzungsgrad aufweist, wird vorgeschlagen, daß die Auffangvorrichtung einen Auffangtisch mit flächenhaft angeordneten Sammelelementen zum Zuführen von aufgefangenem Pulver in Bereiche zwischen den Sammelelementen aufweist und daß in den Bereichen zwischen den Sammelelementen Abführungsöffnungen angeordnet sind.

## Beschreibung

Die Erfindung betrifft eine Pulverabführungsvorrichtung zur Verwendung bei einem Werkstück-Fertigungsverfahren oder einem Werkstück-Bearbeitungsverfahren, bei dem ein Pulver zum Einsatz kommt, umfassend eine Auffangvorrichtung für das Pulver.

Es gibt eine Vielzahl von industriellen Verfahren, bei denen ein Pulver zum Einsatz kommt. Dazu gehören pulvermetallurgische Verfahren oder insbesondere auch Bearbeitungsverfahren an Werkstücken, bei welchen pulverförmige Substanzen als Zusatzwerkstoff eingesetzt werden. Solche Bearbeitungsverfahren sind beispielsweise das Pulverschweißen, das Pulverbeschichten oder das Pulverspritzen. Durch den Einsatz von Lasern hat man neue vorteilhafte Verfahrenseigenschaften erhalten; durch das Laser-Pulverschweißen beispielsweise lassen sich auch bei relativ großer Schweißtiefe gut haltende Schweißnähte erzeugen.

Durch die Laserpulverbeschichtung sind neue Beschichtungsmöglichkeiten eröffnet worden.

Es ist Aufgabe der Erfindung, eine Vorrichtung zu schaffen, die einen hohen Pulvernutzungsgrad ermöglicht.

Diese Aufgabe wird bei der eingangs beschriebenen Vorrichtung erfindungsgemäß dadurch gelöst, daß die Auffangvorrichtung einen Auffangtisch mit flächenhaft angeordneten Sammelelementen zum Zuführen von aufgefangenem Pulver in Bereiche zwischen den Sammelelementen aufweist und daß in den Bereichen zwischen den Sammelelementen Abführungsöffnungen angeordnet sind.

Die erfindungsgemäße Vorrichtung erlaubt es, den größten Teil des nicht genutzten Pulvers aufzufangen, es abzuführen und gegebenenfalls wiederaufzubereiten, d. h. insbesondere zu rezyklieren. Damit ist der Pulvernutzungsgrad erhöht, und eine entsprechende Fertigungs- oder Bearbeitungsanlage arbeitet mit hoher Wirtschaftlichkeit.

Durch die erfindungsgemäße Ausgestaltung des Auffangtisches ist eine große Auffangfläche bereitgestellt, wobei für das Auffangen des Pulvers jedoch nur eine verhältnismäßig geringe Bauhöhe vorgesehen werden muß, so daß insbesondere die erfindungsgemäße Vorrichtung im Zusammenhang mit Bearbeitungsanlagen verwendbar ist, ohne letztere umfangreich modifizieren zu müssen.

Günstigerweise ist ein Sammelelement so ausgebildet, daß es eine geneigte Oberfläche bezüglich einer Abführungsöffnung aufweist. Dadurch kann an dieser geneigten Oberfläche entlang aufgefangenes Pulver in Richtung der Abführungsöffnung rutschen und so auf einfache Weise abgeführt werden.

Bei einer konstruktiv besonders einfachen Ausführungsform weist der Auffangtisch zur Bildung der Sammelelemente ein wellblechartiges Profil auf. Dadurch lassen sich auf einfache Weise geneigte Bereiche bilden, die in Richtung von Abführungsöffnungen geneigt sind.

Es kann auch vorgesehen sein, daß die Sammelelemente durch pyramidenförmige oder keilförmige Erhebungen an dem Auffangtisch gebildet sind. Auf diese Weise läßt sich ein Gitter von Sammelelementen in Versatz zu einem Gitter von Abführungsöffnungen an dem Auffangtisch anordnen und so in einem großen Flächenbereich ungenutztes Pulver auffangen und abführen. Ähnliches gilt für die Variante einer Ausführungsform, bei der die Sammelelemente durch kegelförmige Erhebungen an dem Auffangtisch gebildet sind.

Besonders günstig ist es, wenn der Auffangtisch bezogen auf die Gravitationsrichtung unterhalb eines Werkstücks positionierbar ist. Dadurch kann ungenutztes Pulver dem Auffangtisch zufallen, so daß ein größter Teil des Pulvers diesen erreicht.

Besonders günstig ist es, wenn die oberen Enden der Gesamtheit der Sammelelemente in einer Ebene liegen. Dadurch ist zum einen sichergestellt, daß das Pulver gleichmäßig abgeführt wird. Zum anderen läßt sich dadurch vorteilhafterweise eine Ablagefläche bilden, die beispielsweise zum Ablegen von Werkstücken dienen kann, oder an der sich Werkstücke verspannen lassen.

Besonders vorteilhaft ist es, wenn an den Abführungsöffnungen ein Unterdruck erzeugbar ist. Auf diese Weise wird ein Gas-Pulver-Gemisch aus den Sammelbereichen abgesaugt und somit das Pulver vom Auffangtisch abgeführt. Bei dem Gas handelt es sich vorzugsweise um Luft oder, wenn die Bearbeitung des Werkstückes in einer Schutzgasatmosphäre erfolgt, um das Schutzgas.

Günstigerweise ist es vorgesehen, daß die Unterdruckbeaufschlagung an den Abführungsöffnungen individuell ansteuerbar ist. Dies bedeutet, daß nicht gleichzeitig an allen Abführungsöffnungen ein Unterdruck anstehen muß, wodurch ein Unterdruckerzeuger entsprechend kleiner dimensionierbar ist. Zudem lassen sich bestimmte Ansteuerungssequenzen schalten, die eine optimale Abführung des aufgefangenen Pulvers von dem Auffangtisch ermöglichen.

Günstigerweise ist die Unterdruckbeaufschlagung an den Abführungsöffnungen des Auffangtisches seriell ansteuerbar. Auf diese Weise kann die Luft-Pulver-Fluid-Abführung über den gesamten Auffangtisch gezielt ohne großen Aufwand gesteuert werden.

Vorteilhafterweise ist eine Steuersequenz zur seriellen Ansteuerung der Unterdruckbeaufschlagung an den Abführungsöffnungen vorgegeben, so daß auf diese Weise die Abführung an die speziellen Gegebenheiten anpaßbar ist. Sind beispielsweise bestimmte Bereiche des Auffangtisches stärker mit Pulver beaufschlagt als andere, so läßt sich eine entsprechende Steuersequenz vorgeben, die für eine stärkere Pulverabfuhr aus diesen Bereichen sorgt.

Bei einer konstruktiv vorteilhaften Variante einer Ausführungsform ist die Steuersequenz eine Sequenz von elektronischen Signalen.

Besonders kostengünstig ist es, wenn die Steuersequenz durch mechanische Größen bestimmt ist.

Um eine gute Abführung des Pulvers von dem Auffangtisch zu erreichen, ist es vorteilhaft, wenn die Pulverabführungsvorrichtung eine Verteilervorrichtung mit einem Saugraum aufweist, in welchem ein Unterdruck erzeugbar ist. Durch Schaltung der Verbindung der Abführungsöffnungen mit diesem Saugraum läßt sich entsprechend die Unterdruckbeaufschlagung jeder individuellen Abführungsöffnung auf einfache Weise steuern.

Besonders günstig ist es dann, wenn die Abführungsöffnungen individuell mit dem Saugraum verbunden sind.

Bei einer Variante einer Ausführungsform sind die Verbindungen jeweils durch flexible Leitungen gebildet. Dadurch ist einerseits die Bauhöhe der Anordnung minimiert und andererseits läßt sich der Auffangtisch gut positionieren, ohne daß starre Leitungen diese Positionierbarkeit behindern würden.

Günstigerweise umfaßt dann die Verbindung zwischen einer Abführungsöffnung und dem Saugraum ein steuerbares Ventil, mittels welchem sich die Unterdruckbeaufschlagung einer Abführungsöffnung zuschalten oder abschalten läßt. Die Ventile, bei denen es sich insbesondere um Magnetventile handeln kann, lassen sich auf einfache Weise über eine Steuereinheit, welche elektronische Signale aussendet, in ihrer Schaltung steuern. Steuersequenzen lassen sich auf einfache Weise vorgeben.

Eine besonders kostengünstige Steuerung der Unterdruckbeaufschlagung an den Abführungsöffnungen läßt sich dadurch erreichen, daß Verbindungsöffnungen zwischen den Abführungsöffnungen und dem Saugraum bedeckbar sind. Durch eine Bedeckung einer solchen Verbindungsöffnung wird die zugehörige Abführungsöffnung von dem Saugraum druckentkoppelt, durch eine Freigabe die entsprechende Druckkopplung hergestellt.

Bei einer Variante einer Ausführungsform sind die Verbindungsöffnungen längs des Saugraums angeordnet. Dies ist insbesondere dann vorteilhaft, wenn der Auffangtisch zumindest in einer Richtung eine große Anzahl von Abführungsöffnungen aufweist.

Bei einer anderen Ausführungsform sind die Verbindungsöffnungen an einer Querfläche des Stauraums angeordnet. Dies ist beispielsweise dann vorteilhaft, wenn die Verteilervorrichtung kompakt aufgebaut werden soll.

Die Bedeckung bzw. Freigabe der Verbindungsöffnungen läßt sich dann auf einfache Weise dadurch erreichen, daß in dem Stauraum ein bewegliches mechanisches Steuermittel zur Steuerung der Bedeckung bzw. Freigabe der Verbindungsöffnungen angeordnet ist. Günstigerweise weist dabei das Steuermittel Freigabeöffnungen auf, welche in Abhängigkeit der Anordnung der Verbindungsöffnungen am Saugraum so angeordnet und dimensioniert sind, daß bei Bewegung des Steuermittels die Verbindungsöffnungen sequentiell bedeckbar oder freigebbar sind.

Besonders einfach lassen sich die Abführungsöffnungen dann sequentiell mit Unterdruck beaufschlagen, wenn der Saugraum zylinderförmig ausgebildet ist und das Steuermittel drehbar angeordnet ist, so daß auch auf einfache Weise eine Sequenzwiederholung erreichbar ist.

Bei einer Variante eines Ausführungsbeispiels ist das Steuermittel hohlzylinderförmig. Dies ist insbesondere dann vorteilhaft, wenn die Verteilervorrichtung eine große Anzahl von Verbindungsöffnungen aufweist.

Günstigerweise sind dann die Verbindungsöffnungen längs des Saugraums in einer Querrichtung versetzt angeordnet. Dadurch muß in dem hohlzylinderförmigen Steuermittel eine geringe Anzahl von Freigabeöffnungen vorgesehen werden, und die Steuersequenz ist durch den Versatz der Verbindungsöffnungen erreicht.

Es kann auch vorgesehen sein, daß das Steuermittel eine Mehrzahl von Freigabeöffnungen aufweist, welche längs des Steuermittels in einer Querrichtung versetzt angeordnet sind. Dadurch können die Verbindungsöffnungen auch in einer Linie angeordnet werden und es läßt sich eine entsprechende Steuersequenz bereitstellen.

Bei einer anderen Variante einer Ausführungsform, die konstruktiv besonders einfach ist, ist das Steuermittel eine drehbare Scheibe. Günstig ist es dann, wenn die Scheibe eine Freigabeöffnung aufweist, welche so dimensioniert ist, daß in der gleichen radialen Richtung angeordnete Verbindungsöffnungen gleichzeitig freigebbar sind. Auf diese Weise läßt sich eine einfache Unterdruckbeaufschlagung der Abführungsöffnungen erreichen.

Zur Erzielung eines hohen Pulvernutzungsgrades ist es besonders vorteilhaft, wenn die Pulverabführungsvorrichtung eine Pulverabscheidungsvorrichtung umfaßt. Durch das Abscheiden von Pulver läßt sich ungenutztes Pulver auffangen und rezyklieren bzw. später wiederverwenden.

Bei einer Variante einer Ausführungsform ist die Zuführung von Pulver zu der Pulverabscheidungsvorrichtung gesteuert. Es ist dann insbesondere vorteilhaft, wenn die Steuerung der Zuführung von Pulver zu der Pulverabscheidungsvorrichtung synchron zur Steuerung der Unterdruckbeaufschlagung an den Abführungsöffnungen erfolgt. Dies ermöglicht es, die erfindungsgemäße Vorrichtung kompakt aufzubauen.

Günstigerweise sind die Abführungsöffnungen dabei direkt mit der Pulverabscheidungsvorrichtung verbunden, so daß die Anzahl der Bauelemente gering gehalten werden kann.

Besonders günstig ist es, wenn der Saugraum der Verteilervorrichtung in die Pulverabscheidungsvorrichtung integriert ist. Da aus der Pulverabscheidungsvorrichtung sowieso Gas abgeführt werden muß und damit ein mit Unterdruck beaufschlagter Bereich bereitgestellt werden muß, läßt sich dieser Bereich dann direkt als Saugraum nutzen, mittels dem sich die Abführungsöffnungen mit Unterdruck beaufschlagen lassen.

Vorteilhafterweise ist vorgesehen, daß Verbindungsleitungen zwischen den Abführungsöffnungen und der Pulverabscheidungsvorrichtung tangential in deren Saugraum münden. Dadurch läßt sich ein gutes Trennungsergebnis für das Luft-Pulver-Gemisch erreichen.

Besonders gute Abscheidungsergebnisse lassen sich erhalten, wenn die Pulverabscheidungsvorrichtung einen Fliehkraftabscheider aufweist. Solche Fliehkraftabscheider oder Zyklone sorgen für eine gute Trennung des Luft-Pulver-Gemisches.

Günstigerweise ist dabei die Pulverabscheidungsvorrichtung zwischen den Abführungsöffnungen und einem Unterdruckerzeuger geschaltet. Dann sorgt der Unterdruckerzeuger gleichzeitig dafür, daß Unterdruck an den Abführungsöffnungen erzeugbar ist und die Luft aus der Pulverabscheidungsvorrichtung abgesaugt wird. Auf diese Weise ist im wesentlichen nur ein Gasweg vorhanden und der konstruktive Aufwand entsprechend minimiert.

Besonders vorteilhaft ist die Verwendung der erfindungsgemäßen Pulverabführungsvorrichtung in einer Laserbearbeitungsanlage für ein Werkstück.

Die Erfindung betrifft ferner ein Pulverabführungsverfahren zum Auffangen und Abführen von bei der Fertigung oder Bearbeitung eines Werkstücks eingesetztem Pulver.

Der Erfindung liegt ferner die Aufgabe zugrunde, ein Verfahren zu schaffen, das einen hohen Pulvernutzungsgrad aufweist.

Diese Aufgabe wird bei dem beschriebenen Verfahren erfindungsgemäß dadurch gelöst, daß das Pulver großflächig von einer Auffangfläche aufgefangen wird, daß das aufgefangene Pulver durch Sammelelemente auf der Auffangfläche in Sammelbereiche geleitet wird und daß das Pulver aus den Sammelbereichen abgeführt wird.

Das erfindungsgemäße Verfahren weist die gleichen Vorteile wie die erfindungsgemäße Vorrichtung auf, wobei es besonders vorteilhaft ist, wenn an den Sammelbereichen ein Unterdruck erzeugt wird und dies insbesondere sequentiell erfolgt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung einer Pulverabführungsvorrichtung;
- Fig. 2a: eine Draufsicht auf ein erstes Ausführungsbeispiel eines Auffangtisches;
- Fig. 2b: eine Seitenansicht des Auffangtisches gemäß Fig. 2a;
- Fig. 3: eine perspektivische Ansicht eines Ausschnitts aus einem Auffangtisch gemäß einem zweiten Ausführungsbeispiel;
- Fig. 4: eine Schnittansicht einer Verteilervorrichtung entlang der Linie A-A der Fig. 1;
- Fig. 5: eine Schnittansicht eines zweiten Ausführungsbeispiels einer Verteilervorrichtung;
- Fig. 6: eine Draufsicht auf die Verteilervorrichtung der Fig. 5;
- Fig. 7: eine Draufsicht auf ein Steuermittel der Verteilervorrichtung gemäß Fig. 5;
- Fig. 8: ein erstes Ausführungsbeispiel einer Pulverabscheidungsvorrichtung;
- Fig. 9: ein zweites Beispiel einer Pulverabscheidungsvorrichtung und
- Fig. 10: eine schematische Darstellung eines in eine Pulverabscheidungsvorrichtung integrierten Saugraums.

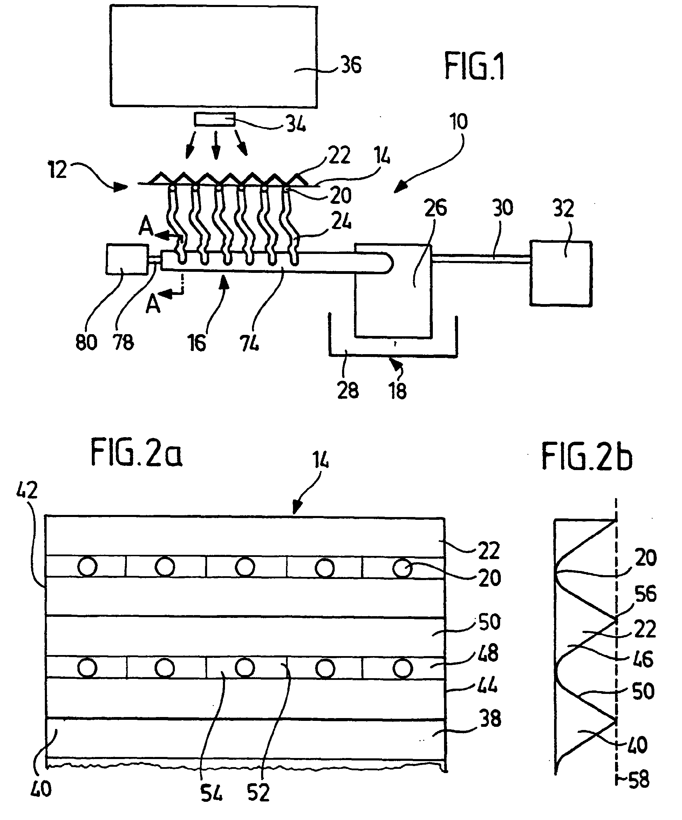

Ein Ausführungsbeispiel einer Pulverabführungsvorrichtung, welche in Fig. 1 gezeigt und als Ganzes mit 10 bezeichnet ist, umfaßt eine Auffangvorrichtung 12 mit einem Auffangtisch 14, eine Verteilervorrichtung 16 und eine Pulverabscheidungsvorrichtung 18.

Die Auffangvorrichtung 12 weist eine Mehrzahl von Abführungsöffnungen 20 und eine Mehrzahl von Sammelelementen 22, die der Zuleitung von aufgefangenem Pulver zu den Abführungsöffnungen 20 dienen, auf. Die Abführungsöffnungen 20 sind jeweils über bevorzugterweise flexible Verbindungsleitungen 24 mit der Verteilervorrichtung 16 verbunden.

Die Verteilervorrichtung 16 wiederum steht mit einem Pulverabscheider 26 der Pulverabscheidungsvorrichtung 18 in Verbindung, welche zum Sammeln von abgeschiedenem Pulver eine Sammelwanne 28 umfaßt.

Der Pulverabscheider 26 ist über eine Leitung 30 mit einem Unterdruckerzeuger 32, beispielsweise der Saugseite einer Pumpe, verbunden.

Der Auffangtisch 14 ist bezogen auf die Gravitationsrichtung unterhalb eines Werkstücks 34 positionierbar, welches beispielsweise über eine Laserbearbeitungsanlage 36 bearbeitet wird, z. B. beschichtet oder geschweißt wird. Bei diesem Bearbeitungsverfahren kommt dabei ein Pulver als Zusatzwerkstoff zum Einsatz, z. B. um das Werkstück zu beschichten oder zu schweißen.

Bei einem ersten Ausführungsbeispiel eines Auffangtisches 14, welches in Fig. 2a, 2b gezeigt ist, weist eine dem Werkstück 34 zugewandt positionierbare Auffangfläche 38 eine wellblechartige Profilstruktur auf. Dazu sind an dem Auffangtisch 14 parallel zueinander liegende Erhebungen 40 mit dreieckigem Querschnitt 46 (Fig. 2b) angeordnet, die von einem seitlichen Ende 42 des Auffangtisches 14 bis zu dem gegenüberliegenden seitlichen Ende 44 verlaufen. Zwischen solchen parallel liegenden Erhebungen, die die Sammelelemente 22 bilden, liegt jeweils ein Sammelbereich 48. Die Abführungsöffnungen 20 sind in diesem Sammelbereich 48 angeordnet und vorzugsweise so, daß sich über den gesamten Auffangtisch 14 (d. h. über die Auffangfläche 38) ein regelmäßiges Gitter an Abführungsöffnungen 20 ergibt.

Durch den dreieckigen Querschnitt 46 weisen die Erhebungen 40 geneigte Flächen 50 auf, welche in Richtung der Abführungsöffnungen 20 orientiert sind (jeweils in benachbarten Sammelbereichen).

Vorzugsweise ist ein Bereich 52 zwischen den Abführungsöffnungen 20 so ausgebildet, daß er ebenfalls geneigte Flächen 54 in Richtung jeweils der Abführungsöffnungen 20 hat.

Das Gitter von Abführungsöffnungen 20 auf dem Auffangtisch 14 ist somit ein Gitter von Senken, die auf der Auffangfläche 38 auf dem niedrigsten Gravitationspotential liegen.

Die oberen, dem Werkstück 34 zugewandten Enden 56 der Erhebungen 40 liegen vorzugsweise in einer Ebene, so daß der Auffangtisch 14 dadurch eine Auflagefläche 58 aufweist (Fig. 2b), auf der ein Werkstück auflegbar und insbesondere positionierbar ist oder die auch als Spannfläche zur Verspannung des Werkstücks mit dem Auffangtisch 14 dienen kann.

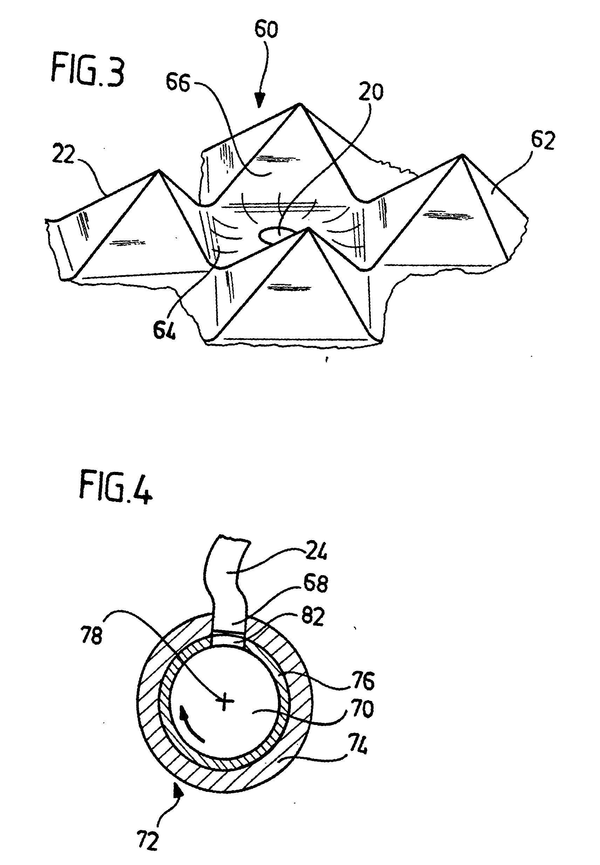

Bei dem zweiten Ausführungsbeispiel einer erfindungsgemäßen Auffangfläche, welche in Fig. 3 dargestellt und als Ganzes mit 60 bezeichnet ist, sind die Sammelelemente 22 durch pyramidenförmige Erhebungen 62 gebildet. Diese pyramidenförmigen Erhebungen 62 sind bevorzugterweise gitterartig angeordnet und zwischen diesen Erhebungen sind Sammelbereiche 64 gebildet, die dadurch ebenfalls bezogen auf die gesamte Auffangfläche 60 gitterförmig angeordnet sind. In diese Sammelbereiche 64 wiederum münden die Verbindungsleitungen 24 über die Abführungsöffnungen 20, wobei bevorzugterweise ein Sammelbereich 64 eine einzige Abführungsöffnung aufweist.

Die Seitenflächen 66 der pyramidenförmigen Erhebungen 62 sind in Richtung der Abführungsöffnungen 20 orientiert, so daß diese bezüglich des Gravitationspotentials eine Potentialsenke darstellen. Außerhalb einer Abführungsöffnung 20 ist ein Sammelbereich 64 bevorzugterweise so ausgestaltet, daß eine Neigung in Richtung dieser Abführungsöffnung 20 vorliegt.

Es kann auch vorgesehen sein, daß die Auffangfläche keilartige Erhebungen, welche einen Grat an ihrem oberen Ende aufweisen, oder kegelförmige Erhebungen umfaßt.

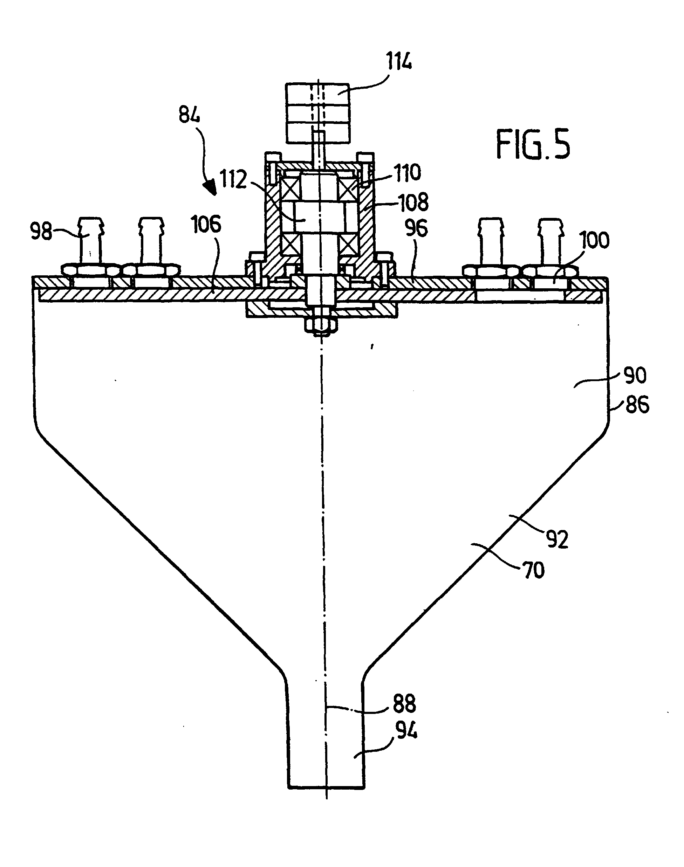

Jede Abführungsöffnung 20 ist über die Verbindungsleitungen 24, die zur leichteren Positionierung des Auffangtisches 14 insbesondere flexibel ausgebildet sein können, mit der Verteilervorrichtung 16 über Verbindungsöffnungen 68 verbunden. Die Verteilervorrichtung 16 selber weist einen Saugraum 70 auf (Fig. 4, 5), in dem ein durch den Unterdruckerzeuger 32 erzeugter Unterdruck ansteht. Über den Saugraum 70 läßt sich jede Abführungsöffnung 20 mit Unterdruck zur Absaugung des in den Sammelbereichen 64 durch die Sammelelemente 22 gesammelten Pulvers beaufschlagen.

Grundsätzlich besteht die Möglichkeit, alle Abführungsöffnungen 20 des Auffangtisches 14 mit einem zeitlich konstanten Unterdruck zu beaufschlagen. Um jedoch jede Abführungsöffnung 20 mit einem im wesentlichen konstanten Druck zu beaufschlagen, muß aufgrund der Vielzahl dieser Abführungsöffnungen in ihrer gitterartigen Anordnung in dem Saugraum 70 ein starker Unterdruck erzeugt werden, so daß der Unterdruckerzeuger 32 eine entsprechend hohe Leistung aufweisen müßte. Erfindungsgemäß ist es daher vorgesehen, die Unterdruckbeaufschlagung der Abführungsöffnungen 20 zeitlich seriell anzusteuern, so daß nicht alle Abführungsöffnungen 20 gleichzeitig mit Unterdruck beaufschlagt sind.

In einem ersten Ausführungsbeispiel ist dazu in den Verbindungsleitungen 24 jeweils ein steuerbares Ventil, z. B. ein Magnetventil, angeordnet, mittels welchem sich die jeweils zugehörige Abführungsöffnung 20 mit dem Saugraum 70 druckkoppeln bzw. -entkoppeln läßt (die Ventile sind in den Figuren nicht gezeigt). Zur Ansteuerung der Unterdruckbeaufschlagung der Abführungsöffnungen 20 ist eine Steuereinheit vorgesehen (in den Figuren nicht gezeigt), die eine elektrische Signale umfassende Steuersequenz an die steuerbaren Ventile ausgibt, um so die Unterdruckbeaufschlagung der Abführungsöffnungen 20 über Öffnung bzw. Schließung dieser Ventile seriell anzusteuern. Die Ansteuerung kann so sein, daß die Ventile und damit eben die Unterdruckbeaufschlagung der Abführungsöffnungen 20 in einer bestimmten Reihenfolge erfolgt, beispielsweise bezogen auf die gitterförmige Anordnung der Abführungsöffnungen 20 zuerst sequentiell die Abführungsöffnungen 20 einer Gitterzeile unterdruckbeaufschlagt werden, danach die nächstfolgende Zeile und so fort.

Bei einem zweiten Ausführungsbeispiel einer Verteilervorrichtung, welche in Fig. 1 und 4 gezeigt und als Ganzes mit 72 bezeichnet ist, ist der Saugraum 70 in einem zylinderförmigen Gehäuse 74 gebildet. Die Verbindungsöffnungen 68 sind längs dieses Gehäuses 74 angeordnet und an der Mantelfläche in einer Querrichtung zu der Längsrichtung des Gehäuses 74 versetzt angeordnet, so daß insgesamt die Verbindungsöffnungen 68 spiralförmig oder wendelförmig in dem Gehäuse 74 liegen.

In dem Gehäuse 74 ist ein Hohlrohr 76 drehbar gelagert, dessen Außendurchmesser im wesentlichen dem Innendurchmesser des Gehäuses 74 entspricht. Eine Drehachse 78 fällt mit der Längsachse des Gehäuses 74 zusammen, so daß in jeder Drehstellung die konzentrische Lage des Hohlrohrs 76 zu dem Gehäuse 74 gewahrt ist.

Das Hohlrohr 76 ist über eine Welle 78 durch einen Motor 80 (Fig. 1) angetrieben.

Das Hohlrohr 76 selber weist eine in Längsrichtung verlaufende Ausnehmung 82 auf, die bevorzugterweise rechteckförmig ist und deren Länge so dimensioniert ist, daß durch die Ausnehmung 82 über den Bereich, in dem Verbindungsöffnungen 68 an dem Gehäuse 74 angeordnet sind, diese zur Unterdruckbeaufschlagung der zugeordneten Abführungsöffnungen 20 in Fluidkontakt mit dem Saugraum 70 bringbar sind.

Durch Rotation des Hohlrohrs 76 im Gehäuse 74 sind die Verbindungsöffnungen 68 wechselweise druckgekoppelt oder -entkoppelt mit dem Saugraum 70, so daß das Hohlrohr 76 ein mechanisches Steuermittel zur Ansteuerung der Unterdruckbeaufschlagung der Abführungsöffnungen 20 ist. Die Steuersequenz, die die Ansteuerung der Gesamtheit der Abführungsöffnungen 20 bestimmt, ist dabei durch die Rotationsgeschwindigkeit des Hohlrohrs 76, die Größe der Ausnehmung 82 und die Anordnung und Dimensionierung der Verbindungsöffnungen 68 in dem Gehäuse 74 vorgegeben.

Bei einer weiteren Ausführungsform sind die Verbindungsöffnungen 68 nicht quer zu der Längsrichtung versetzt angeordnet, sondern liegen im wesentlichen auf einer Linie. Dagegen weist dann das Hohlrohr 76 Ausnehmungen auf, die jetzt quer zur Längsrichtung versetzt sind, so daß eine Bedeckung bzw. Freigabe einer Verbindungsöffnung 68 sequentiell je nach Drehwinkellage des Hohlrohrs 76 in Relation zu dem Gehäuse 74 erfolgt.

Es kann auch vorgesehen sein, daß sowohl die Ausnehmungen an dem Hohlrohr 76 als auch die Verbindungsöffnungen 68 in dem Gehäuse 74 jeweils quer zu einer Längsrichtung versetzt angeordnet sind.

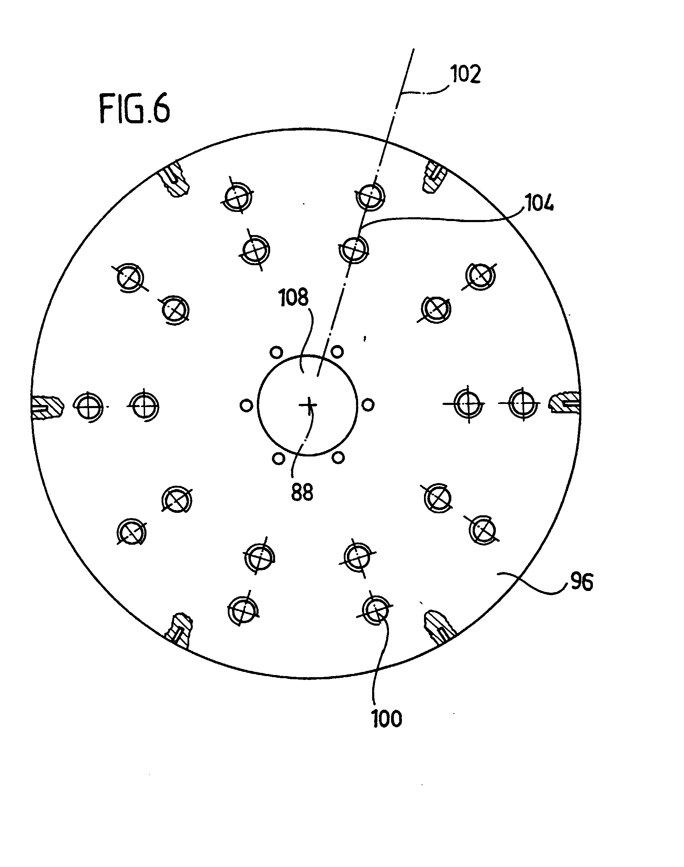

Bei einem dritten Ausführungsbeispiel einer Verteilervorrichtung, welche in den Figuren 5 bis 7 gezeigt und als Ganzes mit 84 bezeichnet ist, weist die Verteilervorrichtung 84 ein Gehäuse 86 mit einer Längsachse 88 auf, welche vorzugsweise in Gravitationsrichtung orientiert ist. Das Gehäuse 86 selber hat eine trichterförmige Gestalt, so daß der Saugraum 70 in dem Gehäuse 86 einen ersten zylinderförmigen Bereich 90, einen zweiten sich daran anschließenden kegelstumpfförmigen Bereich 92 und einen dritten sich daran anschließenden zylinderförmigen Bereich 94 mit kleinerem Querschnitt als der zylinderförmige Bereich 90 aufweist.

Der zylinderförmige Bereich 90 ist durch einen Gehäusedeckel 96 von dem Außenraum getrennt, wobei die Verbindungsleitungen 24 über Kupplungen 98 in den zylinderförmigen Bereich 90 des Saugraums 70 über Verbindungsöffnungen 100 münden.

Bei einer Variante eines Ausführungsbeispiels sind an dem Gehäusedeckel 96 in radialer Richtung 102 jeweils auf gegenüberliegenden Seiten der Längsachse 88 zwei Verbindungsöffnungen 100 in einem Abstand 104 angeordnet. Die Anordnung der Verbindungsöffnungen über die Fläche des Gehäusedeckels 96 ist dabei bevorzugterweise punktsymmetrisch zu der Längsachse 88, so daß in Umfangsrichtung benachbarte Verbindungsöffnungen auf einer Kreislinie liegen und die Verbindungsöffnungen über eine solche Kreislinie gleichmäßig verteilt sind.

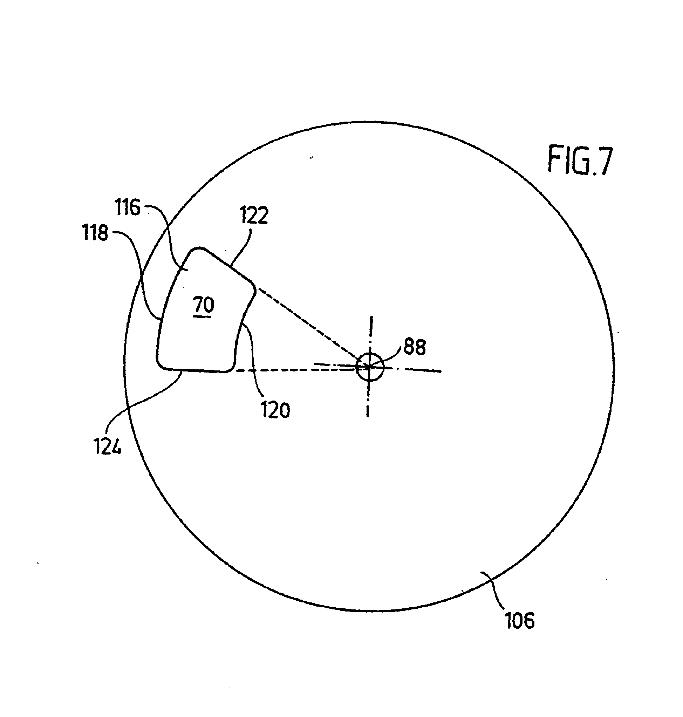

Die Verteilervorrichtung 84 weist eine Steuerscheibe 106 auf (Fig. 5, Fig. 7), die drehbar an einer dem Stauraum 70 zugewandten Seite des Gehäusedeckels 96 gelagert ist. Dazu ist an dem Gehäusedeckel 96 ein Lagergehäuse 108 mit einem Drehlager 110 für eine Welle 112 angeordnet, welche mit der Steuerscheibe 106 drehfest verbunden ist. Die Welle 112 ist über einen Motor 114, vorzugsweise einen Elektromotor, angetrieben.

Die Steuerscheibe 106 weist eine Ausnehmung 116 auf, deren bezogen auf die Längsachse 88 äußere Begrenzung 118 Teil einer Kreislinie ist. Gleiches gilt für eine innere Begrenzung 120. Die seitlichen Begrenzungen 122, 124 sind in radialer Richtung orientiert. Die Ausnehmung 116 ist dabei so dimensioniert, daß gerade ein Paar von in radialer Richtung liegenden Verbindungsöffnungen in der Druckverbindung zu dem Stauraum 70 freigegeben ist, während alle anderen Verbindungsöffnungen durch die Steuerscheibe 106 bedeckt sind.

Die Steuerscheibe 106 ist ein mechanisches Steuermittel zur sequentiellen Steuerung der Unterdruckbeaufschlagung der Mündungsöffnungen 100. Die Steuersequenz ist dabei bestimmt durch die Anordnung der Verbindungsöffnungen 100 in dem Gehäusedeckel 96, die Dimensionierung der Ausnehmung 116 und die Rotationsgeschwindigkeit der Steuerscheibe 106.

Der zylinderförmige Bereich 94 der Verteilervorrichtung 84 ist mit einem Eingang 126 der Pulverabscheidungsvorrichtung 18 verbunden.

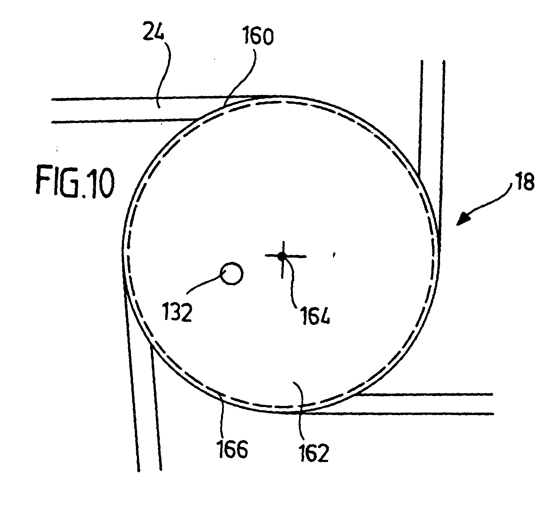

Bei einer Variante eines Ausführungsbeispieles, welches in Fig. 10 gezeigt ist, führen die Verbindungsleitungen 24 von den Abführungsöffnungen 20 über Eintrittsöffnungen 160 in einen Saugraum 162, welcher in der Pulverabscheidungsvorrichtung 18 gebildet ist. Die Verbindungsleitungen 24 sind also direkt mit der Pulverabscheidungsvorrichtung verbunden. Vorzugsweise münden dabei diese Verbindungsleitungen 24 tangential in den Saugraum 162; der dann erreichbare tangentiale Fluideintritt des Luft-Pulver-Gemisches ermöglicht eine gute Entmischung (siehe unten).

Der Saugraum 162 ist dabei durch einen zylindrischen Bereich mit einer Achse 164 gebildet.

In dem Saugraum 182 ist drehbar mit einer Drehachse, welche mit der Achse 164 zusammenfällt, ein Hohlzylinder 166 als Steuermittel gelagert. Dieser weist Öffnungen auf, welche über dessen Umfang verteilt angeordnet sind. Dadurch können die Eintrittsöffnungen 160 bei der Drehung dieses Hohlzylinders 166 sequentiell bedeckt oder freigegeben werden.

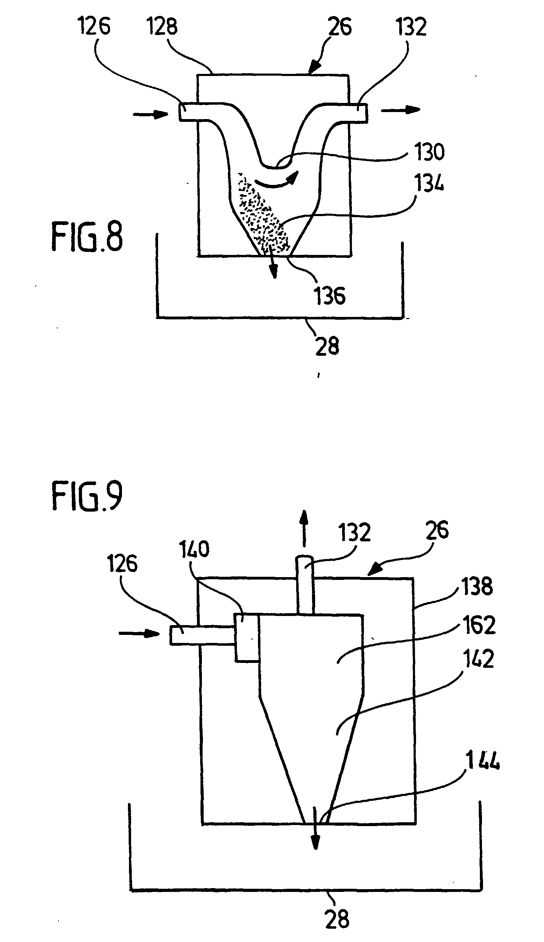

Die Pulverabscheidungsvorrichtung umfaßt einen Pulverabscheider (Fig. 8, 9), welcher auf an sich bekannte Weise ausgebildet ist (Ullmann, Enzyklopädie der technischen Chemie, Band 2, 4. Auflage, Seite 227 - 235). Beispielsweise kann als Pulverabscheider ein Umlenkabscheider 128 (Fig. 9) vorgesehen sein, welcher einen Umlenkbereich 130 aufweist, in welchem ein in den Pulverabscheider strömender Fluidstrom umgelenkt wird. Ein Ausgang 132 dieses Umlenkabscheiders 128 ist mit dem Unterdruckerzeuger 32 verbunden.

Unterhalb des Umlenkbereichs 130 weist der Umlenkabscheider 128 einen Pulversammelbereich 134 auf, der an seinem unteren Ende eine Mündungsöffnung 136 in Orientierung zu der Sammelwanne 28 hat.

Ein weiteres Beispiel eines Pulverabscheiders ist ein Fliehkraftabscheider (Zyklon) 138 (Fig. 9). Bei einem Ausführungsbeispiel, bei welchem ein tangentialer Fluideintritt vorgesehen ist, weist der Fliehkraftabscheider 138 in seinem oberen Bereich eine außenliegende Eintrittsspirale 140 auf, durch die das Luft-Pulver-Gemischfluid beim Eintritt in einen Entmischungsraum 142 einen Drall erhält, welcher letztlich die Entmischung bewirkt. Ein unteres Ende des Entmischungsraums 142 weist eine Mündungsöffnung 144 auf, durch die abgeschiedenes Pulver 144 in die Sammelwanne 28 fallen kann.

An seinem oberen Ende umfaßt der Fliehkraftabscheider 138 einen Anschluß 132 zur Verbindung mit dem Unterdruckerzeuger 32, um Luft aus dem Entmischungsraum 142 abzuführen.

Die erfindungsgemäße Vorrichtung arbeitet wie folgt:

Der Auffangtisch 14 wird unter dem zu bearbeitenden Werkstück 34 positioniert. Pulver, das bei der Werkstückbearbeitung eingesetzt wird und nicht verbraucht wird, fällt durch die Gravitationswirkung auf die Auffangfläche 38.

Es kann vorgesehen sein, daß das Werkstück oberhalb der Auffangfläche gehalten ist oder auch auf der Auffangfläche selber aufsitzt.

Der Auffangtisch 14 ist so dimensioniert und positioniert, daß ein Großteil des bei der Werkstückbearbeitung nicht verbrauchten Pulvers durch die Auffangfläche aufgefangen wird.

Auf dem Auffangtisch 14 aufgefangenes ungenutztes Pulver prallt entweder an den geneigten Flächen 54 bzw. 54 ab oder rutscht an diesen geneigten Flächen in Richtung der Sammelbereiche 48 bzw. 64. (Ein kleinerer Teil des Pulvers fällt direkt in die Abführungsöffnungen 20.) Auf diese Weise sorgen die Sammelelemente 22 dafür, daß sich das Pulver in den Sammelbereichen konzentriert und dort abgeführt werden kann. Für die Abführung sorgt eine Unterdruckbeaufschlagung an den Abführungsöffnungen 20. Dadurch läßt sich das Pulver in den Saugraum 70, welcher den Unterdruck bereitstellt, der selber wieder über den Unterdruckerzeuger 32 erzeugt wird, einsaugen.

Die spezielle Wahl der Sammelelemente sowie ihre Anordnung und Dimensionierung richtet sich dabei unter anderem nach der Größe der Pulverpartikel, der Größe der Auffangfläche und dem Abstand zwischen Werkstück und Auffangfläche.

Um nicht alle Abführungsöffnungen 20 des Auffangtisches 40 gleichzeitig mit Unterdruck beaufschlagen zu müssen, ist die Verteilervorrichtung 16 vorgesehen, durch die die Unterdruckbeaufschlagung (zeitlich) sequentiell steuerbar ist.

Bei dem in Fig. 4 gezeigten Ausführungsbeispiel bewirkt die Rotation des Hohlrohrs 76 in dem Saugraum 70 eine zeitliche Folge von wechselnden Bedeckungen und Freigaben der Verbindungsöffnungen 68 mit dem Saugraum 70, so daß jeweils wechselnd eine Druckkopplung oder Entkopplung zwischen einer bestimmten Abführungsöffnung 20 und dem Saugraum 70 bewirkt wird.

Bei dem in Fig. 5 gezeigten Ausführungsbeispiel bewirkt die Rotation der Steuerscheibe 106 eine wechselnde Freigabe bzw. Bedeckung der Verbindungsöffnungen 100, um so eine DruckKopplung bzw. Entkopplung herzustellen. Durch die Verengung des Saugraums 70 mittels des kegelstumpfförmigen Bereichs 92 der Verteilervorrichtung 84 wird in dem Saugraum bei der Strömung des Fluids (Luft-Pulver-Gemisch) die Geschwindigkeit in Richtung des zylindrischen Bereichs 94 erhöht, so daß für eine gute Abführung des Pulvers gesorgt ist.

(Falls die Bearbeitung des Werkstückes in einer geschlossenen Schutzgasatmosphäre erfolgt, ist das Fluid eine Schutzgas-Pulver-Mischung.)

Der aus der Verteilervorrichtung 16 austretende Fluidstrom wird über den Eingang 126 der Pulverabscheidungsvorrichtung 18 zugeführt, in der eine Trennung des Fluids in den Pulverbestandteil und den Gasanteil (im allgemeinen Luftanteil) erfolgt. Bei einem einfacheren Pulverabscheider (Fig. 8) erfolgt die Abscheidung über Umlenkung des Eintrittstroms, bei der die schweren Fluidbestandteile - das Pulver - aufgrund ihrer größeren Trägheit und der Gravitationswirkung aus dem Gasstrom abgeschieden werden, welcher über den Ausgang 132 mit dem Unterdruckerzeuger 32 verbunden ist, welcher über diese Verbindung auch den Unterdruck in dem Saugram 70 erzeugt. Das Pulver kann dann in die Sammelwanne 28 fallen.

Bei der Variante eines Ausführungsbeispieles, welche in Fig. 10 gezeigt ist, tritt das abgeführte Pulver in den Saugraum 162 der Pulverabscheidungsvorrichtung 18 ein, wobei durch die Drehung des Hohlzylinders 166 die Unterdruckbeaufschlagung an den Abführungsöffnungen 20 gesteuert wird. Nach Eintritt des Luft-Pulver-Gemisches in den Saugraum 162 erfolgt die Trennung des Fluids in den Pulverbestandteil und den Gasanteil wie oben beschrieben.

Bei der Pulverabscheidung durch einen Zyklon wird zur Abscheidung die Trägheit der Pulverteilchen genutzt. Dazu wird beispielsweise über die Eintrittsspirale 140 das Luft-Pulver-gemisch tangential mit Drall in den Entmischungsraum eingeströmt. Das Pulver fällt nach unten und die Luft kann über den Ausgang 132 abgesaugt werden.

Das in der Sammelwanne 28 aufgefangene Pulver kann dem Bearbeitungsprozeß des Werkstückes 34 zugeführt werden bzw. zur späteren Wiederverwendung gesammelt werden.

## Patentansprüche

1. Pulverabführungsvorrichtung zur Verwendung bei einem Werkstück-Fertigungsverfahren oder einem Werkstück-Bearbeitungsverfahren, bei dem ein Pulver zum Einsatz kommt, umfassend eine Auffangvorrichtung (12) für das Pulver, **dadurch gekennzeichnet**, daß die Auffangvorrichtung (12) einen Auffangtisch (14) mit flächenhaft angeordneten Sammelelementen (22) zum Zuführen von aufgefangenem Pulver in Bereiche (48; 64) zwischen den Sammelelementen (22) aufweist und daß in den Bereichen (48; 64) zwischen den Sammelelementen (22) Abführungsöffnungen (20) angeordnet sind.

2. Pulverabführungsvorrichtung nach Anspruch 1, dadurch gekennzeichnet, daß ein Sammelelement (22) so ausgebildet ist, daß es eine geneigte Oberfläche (54) bezüglich einer Abführungsöffnung (20) aufweist.

3. Pulverabführungsvorrichtung nach Anspruch 1 oder 2, dadurch gekennzeichnet, daß der Auffangtisch (14) zur Bildung der Sammelelemente (22) ein wellblechartiges Profil aufweist.

4. Pulverabführungsvorrichtung nach Anspruch 1 oder 2, dadurch gekennzeichnet, daß die Sammelelemente (22) durch pyramidenförmige oder keilförmige Erhebungen (40) an dem Auffangtisch (14) gebildet sind.

5. Pulverabführungsvorrichtung nach Anspruch 1 oder 2, dadurch gekennzeichnet, daß die Sammelelemente durch kegelförmige Erhebungen an dem Auffangtisch (14) gebildet sind.

6. Pulverabführungsvorrichtung nach einem der vorangehenden Ansprüche, dadurch gekennzeichnet, daß der Auffangtisch (14) bezogen auf die Gravitationsrichtung unterhalb eines Werkstücks (34) positionierbar ist.

7. Pulverabführungsvorrichtung nach einem der vorangehenden Ansprüche, dadurch gekennzeichnet, daß die oberen Enden (56) der Gesamtheit der Sammelelemente (22) in einer Ebene liegen.

8. Pulverabführungsvorrichtung nach einem der vorangehenden Ansprüche, dadurch gekennzeichnet, daß durch obere Enden (56) der Sammelelemente (22) eine Auflagefläche (58) gebildet ist.

9. Pulverabführungsvorrichtung nach einem der vorangehenden Ansprüche, dadurch gekennzeichnet, daß an den Abführungsöffnungen (20) ein Unterdruck erzeugbar ist.

10. Pulverabführungsvorrichtung nach Anspruch 9, dadurch gekennzeichnet, daß die Unterdruckbeaufschlagung an den Abführungsöffnungen (20) individuell ansteuerbar ist.

11. Pulverabführungsvorrichtung nach Anspruch 9 oder 10, dadurch gekennzeichnet, daß die Unterdruckbeaufschlagung an den Abführungsöffnungen (20) des Auffangtisches (14) seriell ansteuerbar ist.

12. Pulverabführungsvorrichtung nach Anspruch 11, dadurch gekennzeichnet, daß eine Steuersequenz zur seriellen Ansteuerung der Unterdruckbeaufschlagung an den Abführungsöffnungen (20) vorgegeben ist.

13. Pulverabführungsvorrichtung nach Anspruch 12, dadurch gekennzeichnet, daß die Steuersequenz eine Sequenz von elektrischen Signalen ist.

14. Pulverabführungsvorrichtung nach Anspruch 12, dadurch gekennzeichnet, daß die Steuersequenz durch mechanische Größen bestimmt ist.

15. Pulverabführungsvorrichtung nach einem der Ansprüche 9 bis 14, dadurch gekennzeichnet, daß die Pulverabführungsvorrichtung eine Verteilervorrichtung (16) mit einem Saugraum (70) aufweist, in welchem ein Unterdruck erzeugbar ist.

16. Pulverabführungsvorrichtung nach Anspruch 15, dadurch gekennzeichnet, daß die Abführungsöffnungen (20) individuell mit dem Saugraum (70) verbunden sind.

17. Pulverabführungsvorrichtung nach Anspruch 16, dadurch gekennzeichnet, daß die Verbindungen jeweils durch flexible Leitungen (24) gebildet sind.

18. Pulverabführungsvorrichtung nach Anspruch 16 oder 17, dadurch gekennzeichnet, daß die Verbindung zwischen einer Abführungsöffnung (20) und dem Saugraum (70) ein steuerbares Ventil umfaßt.

19. Pulverabführungsvorrichtung nach Anspruch 16 oder 17, dadurch gekennzeichnet, daß zur Steuerung der Unterdruckbeaufschlagung an den Abführungsöffnungen (20) Verbindungsöffnungen (68; 100) zwischen den Abführungsöffnungen (20) und dem Saugraum (70) bedeckbar sind.

20. Pulverabführungsvorrichtung nach Anspruch 19, dadurch gekennzeichnet, daß die Verbindungsöffnungen (68) längs des Saugraums (70) angeordnet sind.

21. Pulverabführungsvorrichtung nach Anspruch 19, dadurch gekennzeichnet, daß die Verbindungsöffnungen (100) an einer Querfläche des Saugraums angeordnet sind.

22. Pulverabführungsvorrichtung nach einem der Ansprüche 19 bis 21, dadurch gekennzeichnet, daß in dem Saugraum (70) ein bewegliches mechanisches Steuermittel (76; 106) zur Steuerung der Bedeckung bzw. Freigabe der Verbindungsöffnungen (68; 100) angeordnet ist.

23. Pulverabführungsvorrichtung nach Anspruch 22, dadurch gekennzeichnet, daß das Steuermittel (76; 106) Freigabeöffnungen (82; 116) aufweist, welche in Abhängigkeit der Anordnung der Verbindungsöffnungen (68; 100) am Saugraum (70) so angeordnet und dimensioniert sind, daß bei Bewegung des Steuermittels (76; 106) die Verbindungsöffnungen (68; 100) sequentiell bedeckbar oder freigebbar sind.

24. Pulverabführungsvorrichtung nach Anspruch 22 oder 23, dadurch gekennzeichnet, daß der Saugraum (70) zylinderförmig ausgebildet ist und daß Steuermittel drehbar angeordnet ist.

25. Pulverabführungsvorrichtung nach Anspruch 24, dadurch gekennzeichnet, daß das Steuermittel (76) hohlzylinderförmig ist.

26. Pulverabführungsvorrichtung nach einem der Ansprüche 23 bis 25, dadurch gekennzeichnet, daß die Verbindungsöffnungen (68) längs des Saugraums (70) in einer Querrichtung versetzt angeordnet sind.

27. Pulverabführungsvorrichtung nach einem der Ansprüche 23 bis 25, dadurch gekennzeichnet, daß das Steuermittel eine Mehrzahl von Freigabeöffnungen aufweist, welche längs des Steuermittels in einer Querrichtung versetzt angeordnet sind.

28. Pulverabführungsvorrichtung nach Anspruch 24, dadurch gekennzeichnet, daß das Steuermittel eine drehbare Scheibe (106) ist.

29. Pulverabführungsvorrichtung nach Anspruch 28, dadurch gekennzeichnet, daß die Scheibe (106) eine Freigabeöffnung (116) aufweist, welche so dimensioniert ist, daß in der gleichen radialen Richtung (102) angeordnete Verbindungsöffnungen gleichzeitig freigebbar sind.

30. Pulverabführungsvorrichtung nach einem der vorangehenden Ansprüche, dadurch gekennzeichnet, daß die Pulverabführungsvorrichtung eine Pulverabscheidungsvorrichtung (18) umfaßt.

31. Pulverabführungsvorrichtung nach Anspruch 30, dadurch gekennzeichnet, daß die Zuführung von Pulver zu der Pulverabscheidungsvorrichtung (18) gesteuert ist.

32. Pulverabführungsvorrichtung nach Anspruch 31, dadurch gekennzeichnet, daß die Steuerung der Zuführung von Pulver zu der Pulverabscheidungsvorrichtung (18) synchron zur Steuerung der Unterdruckbeaufschlagung an den Abführungsöffnungen (20) erfolgt.

33. Pulverabführungsvorrichtung nach Anspruch 31 oder 32, dadurch gekennzeichnet, daß die Abführungsöffnungen (20) direkt mit der Pulverabscheidungsvorrichtung (18) verbunden sind.

34. Pulverabführungsvorrichtung nach Anspruch 33, dadurch gekennzeichnet, daß der Saugraum (162) der Verteilervorrichtung in die Pulverabscheidungsvorrichtung (18) integriert ist.

35. Pulverabführungsvorrichtung nach Anspruch 33 oder 34, dadurch gekennzeichnet, daß Verbindungsleitungen zwischen den Abführungsöffnungen (20) und der Pulverabscheidungsvorrichtung (18) tangential in deren Saugraum (162) münden.

36. Pulverabführungsvorrichtung nach einem der Ansprüche 30 bis 35, dadurch gekennzeichnet, daß die Pulverabscheidungsvorrichtung (18) einen Fliehkraftabscheider (138) aufweist.

37. Pulverabführungsvorrichtung nach einem der Ansprüche 30 bis 36, dadurch gekennzeichnet, daß die Pulverabscheidungsvorrichtung (18) zwischen den Abführungsöffnungen (20) und einem Unterdruckerzeuger (32) geschaltet ist.

38. Verwendung der Pulverabführungsvorrichtung nach einem der vorangehenden Ansprüche in einer Laserbearbeitungsanlage (36) für ein Werkstück (34).

39. Pulverabführungsverfahren zum Auffangen und Abführen von bei der Fertigung oder Bearbeitung eines Werkstücks eingesetztem Pulver, dadurch gekennzeichnet, daß das Pulver großflächig von einer Auffangfläche aufgefangen wird, daß das aufgefangene Pulver durch Sammelelemente auf der Auffangfläche in Sammelbereiche geleitet wird und daß das Pulver aus den Sammelbereichen abgeführt wird.

40. Pulverabführungsverfahren nach Anspruch 39, dadurch gekennzeichnet, daß an den Sammelbereichen ein Unterdruck erzeugt wird.

41. Pulverabführungsvorrichtung nach Anspruch 40, dadurch gekennzeichnet, daß an den Sammelbereichen sequentiell ein Unterdruck erzeugt wird.
